# EUROPÄISCHE PATENTSCHRIFT

(11) **EP 1 419 955 B1**
(45) Veröffentlichungstag und Bekanntmachung des Hinweises auf die Patenterteilung: **30.08.2006**
(21) Anmeldenummer: 03024300.0
(22) Anmeldetag: 24.10.2003
(51) Int. Cl.: B62D 33/06

(54) **Schlafliege im Fahrerhaus eines Nutzfahrzeuges, mit einem erhöhte Sicherheitsanforderungen erfüllenden Schlafliegerahmen und einer gesicherten Lagerung hierfür**
Folding bunk in the cabin of a truck, with a restraint that complies with higher safety demands, and a secure bearing therefor
Couchette repliable pour cabine de camion avec un support de sécurité élevée, et son palier sécurisé

(30) Priorität: 14.11.2002 DE 10253029
(43) Veröffentlichungstag der Anmeldung: 19.05.2004
(73) Patentinhaber: MAN Nutzfahrzeuge Aktiengesellschaft, 80976 München (DE)
(72) Erfinder: Singer, Christian, 82223 Eichenau (DE); Riebeck, Lars, Dipl.-Ing., 85221 Dachau (DE)

(56) Entgegenhaltungen:
- EP-A- 0 939 023
- DE-A- 19 847 046
- US-A- 3 772 716
- US-A- 4 664 438
- US-A- 5 432 963

## Beschreibung

Die Erfindung betrifft eine Schlafliege im Fahrerhaus eines Nutzfahrzeuges, die für eine erhöhte Belastung ausgelegt und erhöhte Sicherheitsanforderungen erfüllt. Sie ist bei in Serie in normaler Festigkeitsausführung gefertigten Nutzfahrzeugen anwendbar, von denen für eine Gruppe an die über die allgemein üblichen Festigkeitsvorschriften und Sicherheitsanforderungen hinausgehende Anforderungen gestellt und diese Fahrzeuge im Rahmen der Serienproduktion durch einfach zu realisierende zusätzliche konstruktive Maßnahmen verstärkt. Die Erfindung ist dabei speziell auf eine erhöhte horizontale Lasteinwirkung auf das Fahrerhaus von hinten gerichtet, wie sie nach den in Schweden geltenden Sicherheitsvorschriften gefordert werden.

Zum Schutz der Fahrer/Beifahrer müssen die Fahrerhäuser von Frontlenker-Lastkraftwagen bestimmte Sicherheitsanforderungen erfüllen, das heißt, sie müssen zum Schutz der Fahrer/Beifahrer bestimmten Belastungen standhalten. Mit einem Fahrzeug in Standardausführung wird die europäische Richtlinie ECE R29 für Sicherheit und Anforderungen an die Stabilität im Betrieb und bei einem Unfall erfüllt. Für bestimmte Länder, wie beispielsweise Schweden, gelten zum Schutz des Fahrers/Beifahrers weitergehende Anforderungen. Lastkraftwagen, die für ein solches Einsatzgebiet bestimmt sind, müssen diese Anforderungen erfüllen. Als Nachweis hierfür wird ein Lastkraftwagen einem Test unterzogen. Zu diesem Test, der auf Grund der landesspezifischen Besonderheit als Schwedentest bezeichnet wird, gehören die Prüfungen des Fahrerhauses durch den Pendelschlag vorn, Pendelschlag hinten und das Aufbringen einer bestimmten Dachlast. Alle drei Prüfungen werden nacheinander an demselben Fahrzeug durchgeführt. Die Erfindung bezieht sich auf die Prüfung Pendelschlag hinten. Die Türen des Fahrerhauses müssen bei diesem Pendelschlag geschlossen bleiben. Eine weitere Bedingung besteht darin, dass die Funktionsfähigkeit sämtlicher Lagerstellen des Fahrerhauses bezüglich der Stabilität gewährleistet bleiben muss. Bei einem von hinten auf das Fahrerhaus ausgeführten Pendelschlag verformt sich die Rückwand und die im Prinzip einteilige Schlafliege wird nach vorn in die Richtung des Fahrers/Beifahrers verschoben. Dabei kann der Fahrer/Beifahrer verletzt werden. Da die Schlafliege, wie beispielsweise aus den Offenlegungsschriften DE 189 47 046 A1 und DE 189 47 046 A1 bekannt, aus einem Rechteckrohr-Rahmen in Schweißausführung besteht und deshalb eine hohe Stabilität aufweist, bedeutet es bei einem von hinten ausgeübten Pendelschlag die zwangsweise Bewegung des in horizontaler Stellung befindlichen Schlafliegenrahmens in den Innenraum des Fahrerhauses hinein eine Gefahr für den Fahrer und Beifahrer.

Der Erfindung liegt die Aufgabe zugrunde, den Schlafliegenrahmen so auszubilden, dass er einerseits für die Funktion als Schlafliege erfüllt, aber bei dem nach dem Schwedentest geforderten Pendelschlag von hinten keine Gefährdung der im Fahrerhaus befindlichen Personen durch die hinter dem Fahrer-/Beifahrersitz angeordnete und in horizontaler Lage befindliche Schlafliege eintritt.

Dadurch, dass die Profile des Schlafliegenrahmens nicht mehr alle miteinander verschweißt, sondern nur drei miteinander verschweißt sind, so dass sie zur Fahrerhausrückwand hin einen offenen U-förmigen Rahmen bilden und dieses "U" mit einem hinteren Rahmenteil, das in besonderer Weise mit dem U-förmigen Rahmen verbunden ist, geschlossen ist, ist eine Sollbruchstelle eingerichtet, die bei einer entsprechenden, festgelegten Belastung reißt, wodurch dann das hintere Rahmenteil sich in das U-förmige, vordere Rahmenteil hineinschiebt.

Dadurch ist sichergestellt, dass der Liegenrahmen sich weder über die Sitze von Fahrer und Beifahrer schiebt, noch die Sitzbefestigungen ausgerissen oder die Sitzlehnen abgebrochen werden. Das hintere Rahmenteil hat zwei schräg angeordnete Streben, die einerseits an dem hinteren Profil über, je Strebe, vier Verscheißungen in einem Langrund definiert starr verbunden sind und andererseits an den Schenkeln des vorderen, U-förmigen Rahmens mit zwei Niete je Schenkel verbunden sind. Bei der Belastung "Schlag von hinten" wird die Fahrerhausrückwand nach innen verbeult, drückt sich auf den hinteren Rahmenteil, der dann ein Abscheren der Niete verursacht und sich in den vorderen, U-förmigen Rahmen schiebt.

Bei diesem Verschieben darf sich das hintere Rahmenteil nicht von dem vorderen Rahmenteil lösen, da sonst das hintere Rahmenteil als Einzelteil umherfliegen könnte und damit Personenschaden anrichten könnte.

Deshalb ist jede Querstrebe im Querschnitt ein offenes "U", das an den Schenkeln mit den Schenkeln des vorderen, U-förmigen Rahmens vernietet ist. Dieser U-förmige Querschnitt der Querstreben hat weiterhin den Vorteil, dass, wenn das hintere Rahmenteil sich nicht gleichmäßig nach dem Abscheren der Niete nach vorne verschiebt, trotzdem die Führung des hinteren Rahmenteils im vorderen Rahmenteil gesichert ist, weil durch den U-förmigen Querschnitt der Querstreben, diese immer im Eingriff mit dem vorderen Rahmenteil sind.

Weiterhin sind an den Stirnseiten des hinteren Profils Gleitbleche angeschweißt, die ein Verkanten des Profils im Gleitvorgang verhindern.

Durch die geteilte Ausführung des Schlafliegenrahmens mit den im vorher beschriebenen Maßnahmen, wäre die Schlafliege für den Gebrauch in den hinteren, nicht verschweißten Ecken, an denen auch die Drehpunktlagerung der Liege ist, zu weich.

Deshalb ist stirnseitig an den Schenkeln des vorderen U-förmigen Rahmens an jedem Schenkel eine Lasche mit zwei Winkelblechen angeschweißt, wobei in jeder Lasche ein Bolzen mit kegeligem Ansatz eingeschweißt ist.

In diesen Laschen mit Winkelblechen und den zwei Bolzen wird vor der Vernietung der Streben das hintere Profil eingerastet und dann die Streben mit den Schenkeln des vorderen U-förmigen Profils vernietet. Dadurch sind die hinteren Ecken des Liegenrahmens für den Betriebsfall genügend steif.

Da die Liege schwenkbar ist und es sich um komfortable Liegen handelt, ist die Lagerung im Drehpunkt bzw. Schwenkpunkt mittels Gummi-Metallelementen gestaltet.

Diese Gummi-Metallelemente würden bei dem genannten Schlag von hinten auf das Fahrerhaus ausreißen und der Liegenrahmen könnte dann umherfliegen.

Durch eine mit hochgedrücktem Rand gestaltete Scheibe, die mit einer Schraube stirnseitig an den Lagerzapfen des Schwenklagers angeschraubt ist und die größer ist, als der Gummiteil des Gummi-Metall-Elements, ist das Lager ausreißfest gestaltet.

In der Zeichnung ist ein Ausführungsbeispiel der Erfindung schematisch dargestellt. Es zeigen:
- Fig. 1: den Schlafliegenrahmen,
- Fig. 2: den Schnitt II-II aus Fig. 1,
- Fig. 3: die hintere Eckverbindung des Schlafliegenrahmens,
- Fig. 4: das Schwenklager der Liege,
- Fig. 5: eine Schnittzeichnung durch das Schwenklager,
- Fig. 6: die Testanordnung "Schwedentest".

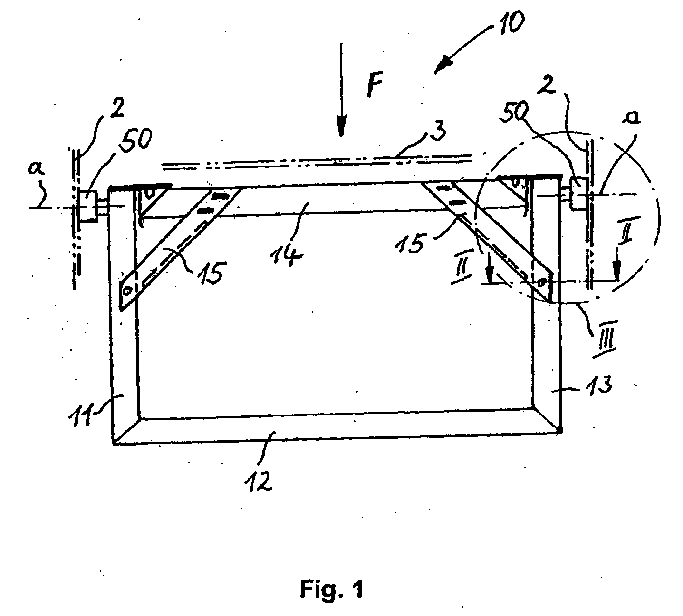

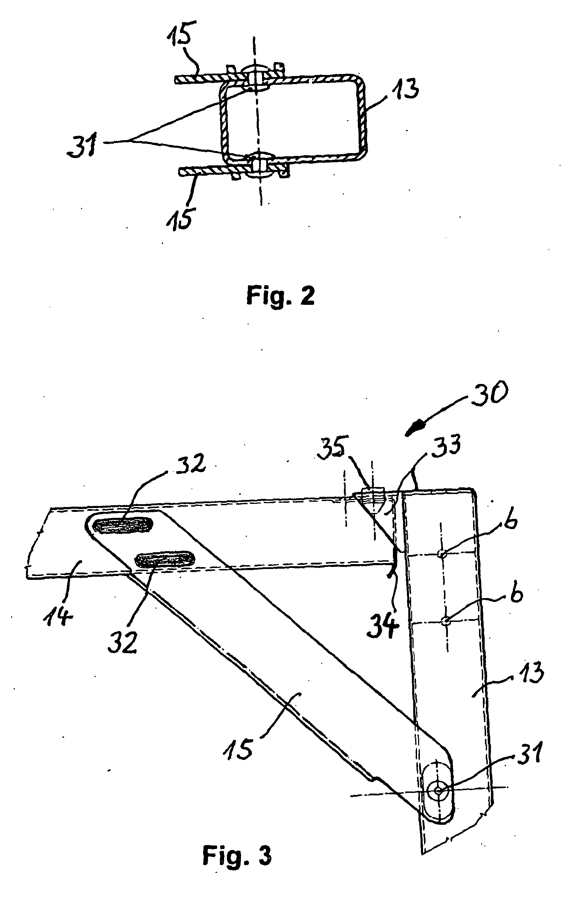

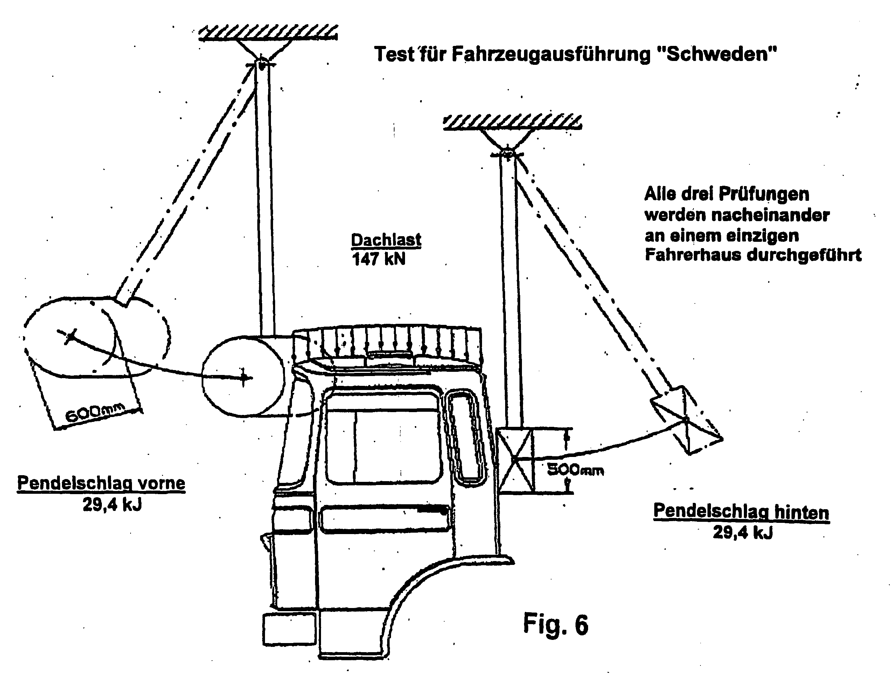

Die Fig. 1 zeigt den Schlafliegenrahmen 10. Die Profile 11, 12, 13 sind miteinander verschweißt und bilden den vorderen U-förmigen Rahmen. In diesen Rahmen ist das hintere Rahmenteil 14, 15 eingebracht und so befestigt, dass bei einem definierten Schlag von hinten, Fig. 6, auf die Rückwand 3 die Vernietung, Fig. 2, an den Querstreben 15 und den Schenkeln 11, 13 des vorderen U-förmigen Rahmens abgeschert werden und das hintere Rahmenteil 14, 15 in den vorderen U-förmigen Rahmen 11, 12, 13 hineingeschoben wird. Der Schlafliegenrahmen 10 ist in den Lagern 50 schwenkbar in den Seitenwänden 2 des Fahrerhauses gelagert.

Die Fig. 2 zeigt den Schnitt II-II aus Fig. 1. Die freien Schenkel 15 der im Querschnitt U-förmigen Strebe 15 ist mit dem Profil 13 des vorderen U-förmigen Rahmens 11, 12, 13 vernietet, ebenso Profil 11 mit der weiteren Strebe 15. Die Niete 31 sind hochfeste Blindniete.

Die Fig. 3 zeigt den rechtsseitigen Eckverband des Schlafliegenrahmens (linksseitig spiegelbildlich). Die Strebe 15 ist mit Schweißungen in vier Langrunden 32 mit dem hinteren Profil 14 verbunden. Weiterhin ist die Strebe 15 mit dem Profil 13 vernietet. Die Niete 31 werden bei dem Schlag von hinten (Schwedentest) abgeschert. Nach dem Abscheren der Niete 31 rutscht das Profil 14 mit der Strebe 15 am Profil 13 nach vorne (linksseitig am Profil 11). An dem Profil 14 ist stirnseitig links und rechts je ein Gleitblech 34 angebracht, damit sich das hintere Rahmenteil 14, 15, wenn es nach vorne verschoben wird, nicht verhakt. Durch die genannte Auftrennung des Liegenrahmens wäre dieser für den Betriebsfall, z. B. der Beifahrer schläft während der Fahrt, nicht mehr stabil genug. Die nötige Stabilität wird dadurch erreicht, dass die genannten hinteren Ecken versteift werden. Dies wird durch je eine stirnseitig an den Profilen 13, 11 (Strebe 11 hier nicht gezeigt, spiegelbildlich angeordnet) angeschweißte Lasche 33 mit abgewinkelten Winkelblechen, die auch an den Profilen 13, 11 angeschweißt sind und einen kegeligen Bolzen 35, erreicht.

Über die zwei (je Seite) Bohrungen b ist der Schlafliegenrahmen mit dem Winkel 54 des Schwenklagers 50 verbunden.

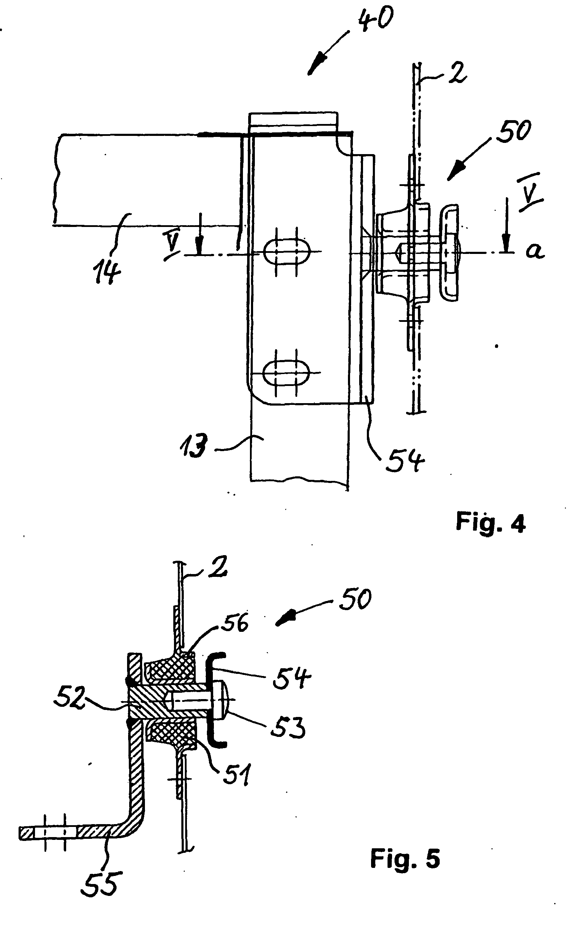

Die Fig. 4 zeigt den Zusammenbau 40 von Lager 50 und Schlafliegenrahmen 10. An dem Lager 50 ist ein Winkel 55 angebracht auf dem das Profil 13 aufliegt und mit dem Winkel 55 verschraubt ist. Das Profil 14 ist mit dem Profil 13 des Schlafliegenrahmens verbunden. Das Lager 50 ist an der Seitenwand 2 des Fahrerhauses angebracht. Die Linie "a" ist der Drehpunkt des Lagers 50.

Die Fig. 5 zeigt das Lager 50 im Schnitt. Das Gummi-Metallelement 51 ist mit der Seitenwand 2 des Fahrerhauses verbunden. Im Gummi-Metallelement 51 ist der Lagerzapfen 52 an dem der Winkel 55 angeschweißt ist, gelagert. Damit bei dem Schlag auf die Rückwand das Gummi-Metallelement 51 nicht ausreißt, ist eine Scheibe 54, die so groß ist, dass sie im genannten Belastungsfall an das Metallteil 56 des Gummi-Metallelements 51 anschlägt und nicht durchgezogen werden kann, so dass das Gummi-Metallelement 51 nicht zerstört werden kann. Damit bleibt auch der Schlafliegenrahmen 10 in seiner Lagerung 50.

Die Fig. 6 zeigt die Versuchsanordnung für den "Schwedentest".

## Patentansprüche

1. Schlafliege im Fahrerhaus eines Nutzfahrzeuges mit einem erhöhte Sicherheitsanforderungen erfüllenden Schlafliegerahmen (10) und einer gesicherten Lagerung hierfür, der Schlafliegerahmen (10) in wesentlichen von vier Profilen (11, 12, 13, 14) gebildet und rechteckig gestaltet ist und dieser Schlafliegerahmen quer zur Fahrtrichtung zwischen der Rückwand (3) des Fahrerhauses und dem Fahrer- sowie Beifahrersitz angeordnet ist und um eine Achse (a) schwenkbar ist, wobei der Schlafliegerahmen (10) in der Achse durch je ein Drehlager (50) mit den Seitenwänden des Fahrerhauses verbunden ist, und jedes der Drehlager (50) einen Winkel (55) aufweist, mit dem der Schlafliegerahmen (10) verschraubt ist, wobei der Schlafliegerahmen (10) in einen in Fahrtrichtung vorderen Rahmenteil (11, 12, 13) und einen hinteren Rahmenteil (14, 15) getrennt ist, wobei das vordere Rahmenteil (11, 12, 13) aus dem vorderen Profil (12) mit den beiderseits daran rechtwinklig angeordneten weiteren zwei Profilen (11, 13) besteht und so einen offenen U-förmigen Rahmen bildet, dessen offene Seite nach hinten gerichtet ist, **dadurch gekennzeichnet, dass** das hintere Rahmenteil (14, 15) welches aus dem Profil (14) und aus Querstreben (15) besteht, den offenen Rahmen schließt und bei einem Schlag von hinten, eine zwischen den Querstreben (15) und den Profilen des U-förmigen Rahmens vorgesehene Vernietung (31) abschert und das hintere Rahmenteil (14, 15) sich nach vorne verschiebt und weiterhin dieser Verband (11, 12, 13, 14, 15) ausreissfest über die Lagerung (50) links und rechts in der Seitenwand (2) gehalten wird.

2. Schlafliege im Fahrerhaus eines Nutzfahrzeuges nach Anspruch 1, **dadurch gekennzeichnet, dass** die Streben (15) am Profil (14) definiert gestaltfest über Langrunde (32) verschweißt sind.

3. Schlafliege im Fahrerhaus eines Nutzfahrzeuges nach Anspruch 1, **dadurch gekennzeichnet, dass** an den Stirnseiten des Profils (14) Gleitbleche (34) angebracht sind.

4. Schlafliege im Fahrerhaus eines Nutzfahrzeuges nach Anspruch 1, **dadurch gekennzeichnet, dass** die nicht verschweißten Ecken (30) ihre Betriebsfestigkeit durch eine Lasche (33), die mit dem Profil (13) verschweißt ist und durch einen Bolzen (35), der mit der Lasche (33) verschweißt ist und in das Profil (14) eingesteckt ist, erhalten.

5. Schlafliege im Fahrerhaus eines Nutzfahrzeuges nach Anspruch 1, **dadurch gekennzeichnet, dass** nach dem Abscheren der Niete (31) das Profil (14) durch die Streben (15) geführt wird und geführt bleibt und somit das hintere Rahmenteil (14, 15) nicht aus dem vorderen Rahmenteil (11, 12, 13) herausfällt.

6. Schlafliege im Fahrerhaus eines Nutzfahrzeuges nach Anspruch 1, **dadurch gekennzeichnet, dass** am Drehlager (50) eine Scheibe (54) angebracht ist, die bei einer hohen Belastung am Metallteil (56) des Gummi-Metallelementes (51) anliegt und damit verhindert, dass das Gummi-Metallelement (51) ausreißt.

## Claims

1. Bunk in the cab of a commercial vehicle with a bunk frame (10) conforming to more stringent safety requirements and with secured mounts for this purpose, whereby the bunk frame (10) is basically composed of four sections (11, 12, 13, 14), designed rectangularly and arranged between the rear wall (3) of the cab and the driver and co-driver's seats in transverse direction relative to the vehicle's driving direction and can be slewed about an axis (a), whereby in said axis either side of the bunk frame (10) is connected with the side walls of the cab by means of pivot bearings (50), each of which features a bracket (55) to which the bunk frame (10) is bolted, whereby the bunk frame (10) is divided into a - in respect of the driving direction - front frame part (11, 12, 13) and a rear frame part (14, 15), whereby the front frame part (11, 12, 13) consists of the front section (12) with the further two sections (11, 13) arranged on either side at right angles to it, thus forming an open U-type frame whose open side faces towards the rear, **characterised in that** the rear frame part (14, 15) consisting of the section (14) and of transverse struts (15) closes the open frame and, upon impact from the rear, shears off a rivetted connection (31) provided between the transverse struts (15) and the sections of the U-shaped frame and that the rear frame part (14, 15) shifts towards the front and that, in addition, this structure (11, 12, 13, 14, 15) is retained in the side wall (2) in a tear-out-resistant manner via the bearings (50) at left and right.

2. Bunk in the cab of a commercial vehicle according to Claim 1, **characterised in that** struts (15) are welded to the section (14) via rounded oblongs (32) so that they retain their defined form.

3. Bunk in the cab of a commercial according to Claim 1, **characterised in that** sliding sheets (34) are fitted to the end faces of the section (14).

4. Bunk in the cab of a commercial according to Claim 1, **characterised in that** the non-welded edges (30) receive their operational strength through a tab (33) welded to the section (13) and through a bolt (35) welded to the tab (33) and inserted in the section (14).

5. Bunk in the cab of a commercial according to Claim 1, **characterised in that** after the rivet (31) has been sheared off, the section (14) is guided by the struts (15) and remains guided and, consequently, the rear frame part (14, 15) cannot fall out of the front frame part (11, 12, 13).

6. Bunk in the cab of a commercial according to Claim 1, **characterised in that** a disc (54) is fitted to the pivot bearing (50) and contacts the metal part (56) of the rubber/metal element (51) if under heavy load, thus preventing the rubber/metal element (51) from being torn off.

## Revendications

1. Couchette de cabine d'un véhicule industriel avec un cadre de couchette (10) satisfaisant à des exigences de sécurité élevées et une fixation sécurisée pour celui-ci, le cadre de couchette (10) étant rectangulaire, principalement constitué de quatre profilés (11, 12, 13, 14), disposé perpendiculairement au sens de la marche entre la paroi arrière (3) de la cabine et le siège du chauffeur et du convoyeur et pivotant autour d'un axe (a), le cadre de couchette (10) étant relié dans l'axe aux parois latérales de la cabine par un palier tournant (50) de chaque côté, et chaque palier tournant (50) présentant une équerre (55) avec laquelle le cadre de couchette (10) est vissé, le cadre de couchette (10) étant divisé en une partie de cadre avant dans le sens de la marche (11, 12, 13) et une partie de cadre arrière (14, 15), la partie de cadre avant (11, 12, 13) se composant du profilé avant (12) et des deux autres profilés (11, 13) disposés à angle droit, et formant ainsi un cadre en U ouvert, dont le côté ouvert est orienté vers l'arrière, **caractérisée en ce que** la partie de cadre arrière (14, 15), qui se compose du profilé (14) et de montants transversaux (15), referme le cadre ouvert et, en cas de choc arrière, casse un rivetage (31) prévu dans les montants transversaux (15) et les profilés du cadre U et que la partie arrière du cadre (14, 15) se décale vers l'avant et cet assemblage (11, 12, 13, 14, 15) est maintenu par le palier (50) à gauche et à droite dans la paroi latérale (2).

2. Couchette de cabine d'un véhicule industriel selon la revendication 1, **caractérisée en ce que** les montants transversaux (15) du profilé (14) sont soudées conformément à l'endurance caractéristique par des ovales (32).

3. Couchette de cabine d'un véhicule industriel selon la revendication 1, **caractérisée en ce que** des tôles de guidage (34) sont disposées sur les faces du profilé (14).

4. Couchette de cabine d'un véhicule industriel selon la revendication 1, **caractérisée en ce que** les coins non soudés (30) reçoivent leur stabilité opérationnelle par une languette (33) soudée au profilé (13) et une cheville (35) soudée à la languette (33) et insérée dans le profilé (14).

5. Couchette de cabine d'un véhicule industriel selon la revendication 1, **caractérisée en ce que**, après l'arrachage du rivet (31), le profilé (14) est guidé par les montants transversaux (15) et y reste et qu'ainsi la partie arrière du cadre (14, 15) ne tombe pas de la partie avant du cadre (11, 12, 13).

6. Couchette de cabine d'un véhicule industriel selon la revendication 1, **caractérisée en ce qu'**une rondelle (54) est fixée au palier tournant (50), qui s'appuie contre la partie métallique (56) de l'élément en caoutchouc-métal (51) en cas de forte sollicitation et empêche ainsi la rupture de l'élément en caoutchouc-métal (51).
